(19) Europäisches Patentamt
European Patent Office
Office européen des brevets

(11) Publication number: **0 105 712**
**B1**

(12) **EUROPEAN PATENT SPECIFICATION**

(45) Date of publication of patent specification: **17.12.86**

(51) Int. Cl.[4]: **C 08 G 65/32,** C 10 L 1/22

(21) Application number: **83305831.6**

(22) Date of filing: **28.09.83**

(54) **Polyether aminoether carbamates and hydrocarbon fuels containing them as deposit control additives.**

(30) Priority: **30.09.82 US 429694**
**30.09.82 US 429695**

(43) Date of publication of application:
**18.04.84 Bulletin 84/16**

(45) Publication of the grant of the patent:
**17.12.86 Bulletin 86/51**

(84) Designated Contracting States:
**DE FR GB**

(56) References cited:
**EP-A-0 024 134**
**US-A-4 247 301**
**US-A-4 274 837**
**US-A-4 329 240**

(73) Proprietor: **CHEVRON RESEARCH COMPANY**
**525 Market Street**
**San Francisco California 94105 (US)**

(72) Inventor: **Plavac, Frank**
**550 Sunnyview Drive**
**Pinole California 94564 (US)**

(74) Representative: **Kosmin, Gerald Emmanuel et al**
**HASELTINE, LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 105 712 B1

## Description

This invention relates to novel carbamates useful as deposit control additives in hydrocarbon fuels used in internal combustion engines.

In recent years, numerous fuel detergents or "deposit control" additives have been developed. These materials when added to hydrocarbon fuels employed in internal combustion engines effectively reduce deposit formation which ordinarily occurs in intake systems such as carburetor ports, throttle bodies, venturies, intake ports and intake valves. The reduction of these deposit levels has resulted in increased engine efficiency and a reduction in the level of hydrocarbon and carbon monoxide emissions.

Thus, the introduction of fuel compositions containing deposit control additives has resulted in many cases in the reduction of harmful atmospheric pollutants and, since greater engine efficiencies are maintained, in fuel savings.

A complicating factor has, however, recently arisen. With the advent of automobile engines that require the use of unleaded gasolines (to prevent disablement of catalytic converters used therewith to reduce emissions), it has been found difficult to provide gasoline of high enough octane to prevent knocking and the concomitant damage which it causes. The chief problem lies in octane requirement increase, herein called "ORI", which is caused by deposits formed in the combustion chamber while the engine is operating on commercial gasoline.

The basis of the ORI problem is as follows: each engine, when new, requires a certain minimum octane fuel in order to operate satisfactorily without pinking and/or knocking. As the engine is operated on any gasoline, this minimum octane increases and, in most cases, if the engine is operated on the same fuel for a prolonged period, will reach equilibrium. This is apparently caused by an amount of deposits in the combustion chamber. Equilibrium is typically reached after 5,000 to 15,000 miles (8047 to 24140 km) of automobile operation.

Octane requirement increase, measured in particular engines with commercial gasolines, will vary at equilibrium from 5 to 6 octane units to as high as 12 or 15 units, depending upon the gasoline compositions, engine design and type of operation. The seriousness of the problem is thus apparent. A typical automobile with a research octane requirement of 85 when new may, after a few months of operation, require 97 research octane gasoline for proper operation, and little unleaded gasoline of that octane is available. The ORI problem exists to some degree with engines operated on leaded fuels.

It is believed, however, by many experts that the ORI problem, while present with leaded gasolines, is much more serious with unleaded fuel because of the different nature of the deposits formed with the respective fuels, the size of increase, and because of the lower availability of high-octane unleaded fuels. This problem is compounded by the fact that the most common means of enhancing the octane of unleaded gasoline, increasing its aromatic content, also appears to increase the eventual octane requirement of the engine. Furthermore, some of the presently used nitrogen-containing deposit control additives and the mineral oil or polymer carriers commonly used with such additives appear to contribute significantly to the ORI of engines operated on unleaded fuel.

It is, therefore, highly desirable to provide deposit control additives which effectively control deposits in intake systems of engines operated with fuels containing such additives, but do not contribute to the combustion chamber deposits which cause increased octane requirements.

In European Patent No. 24134 and U.S. Patents Nos. 4,274,837 and 4,329,240, there are disclosed deposit control additives for use in gasolines which are hydrocarbyl-terminated poly(oxyalkylene) aminocarbamates in which a hydrocarbyl-terminated poly (oxyalkylene) moiety is bonded through a carbamate linkage to an amine moiety which can be derived from a polyalkylene polyamine, for example ethylene diamine.

We have now found that improved deposit control can be obtained by using as the amine moiety an aminohydrocarbyloxyhydrocarbyl moiety derived from a diamine in which the terminal amino groups are separated by a hydrocarbyloxyhydrocarbyl linkage.

Thus in accordance with the present invention, there are provided deposit control additives which are hydrocarbylpoly(oxyalkylene) aminohydrocarbyloxyhydrocarbyl carbamates having a molecular weight in the range from 500 to 10,000, preferably 500 to 5000. The hydrocarbylpoly(oxyalkylene) moiety of the carbamate is comprised of oxyalkylene units selected from $C_2$—$C_5$ oxyalkylene units of which there are at least sufficient branched-chain oxyalkylene units to render the carbamate soluble in a liquid hydrocarbon fuel, and is terminated (or "capped") by a hydrocarbyl group containing from 1 to 30 carbon atoms. The aminohydrocarbyloxyhydrocarbyl moiety of the carbamate is derived from a diaminoether having from 2 to 60 carbon atoms and comprises linear, cyclic, or branched oxyalkylene groups of from 1 to 12 carbon atoms, or oxyarylene groups of from 2 to 24 carbon atoms terminated at either end by an amino group. The carbamate may contain from 1 to 10 of the hydrocarbyloxyhydrocarbyl moieties. The two moieties defined above are joined together by a carbamate linking group.

As disclosed above, the hydrocarbyl poly(oxyalkylene)aminohydrocarbyloxyhydrocarbyl carbamate of the present invention consists of three moieties: a hydrocarbyl-capped poly(oxyalkylene) moiety; a diaminohydrocarbyloxyhydrocarbyl moiety; and a carbamate linkage, i.e.

$$-O-\overset{\overset{\displaystyle O}{\|}}{C}-NH-$$

which bonds together the other two moieties. The poly(oxyalkylene) moiety of the carbamate additive is selected to provide solubility in liquid hydrocarbons, in particular those boiling in the gasoline boiling range. The carbamates of the present invention may also be referred to for brevity's sake as polyether aminoether carbamates.

Poly(oxyalkylene) moiety

The hydrocarbyl-terminated poly(oxyalkylene) polymers which are utilized in preparing the carbamates of the present invention are monohydroxy compounds, i.e., alcohols, often termed monohydroxy polyethers, or polyalkylene glycol monohydrocarbylethers, or "capped" poly(oxyalkylene) glycols and are to be distinguished from the poly(oxyalkylene) glycols, or polyols, which are not hydrocarbyl-terminated, i.e., not capped. The hydrocarbyl-terminated poly(oxyalkylene) alcohols are produced by the addition of lower alkylene oxides, such as oxirane, ethylene oxide, propylene oxide, the butylene oxides, or the pentylene oxides to the hydroxy compound ROH under polymerization conditions, wherein R is the hydrocarbyl group which caps the poly(oxyalkylene) chain. Methods of production and properties of these polymers are disclosed in U.S. Patents Nos. 2,841,479 and 2,782,240, and Kirk-Othmer's "Encyclopedia of Chemical Technology", Volume 19, p. 507. In the polymerization reaction, a single type of alkylene oxide may be employed, e.g., propylene oxide, in which case the product is a homopolymer, e.g., a poly(oxypropylene) propanol. However, copolymers are equally satisfactory and random copolymers are readily prepared by contacting the hydroxyl-containing compound with a mixture of alkylene oxides, such as a mixture of propylene and butylene oxides. Block copolymers of oxyalkylene units also provide satisfactory poly(oxyalkylene) polymers for use in the present invention.

In general, the poly(oxyalkylene) polymers are mixtures of compounds that differ in polymer chain length. However, their properties closely approximate to those of the polymer represented by the average composition and molecular weight.

The hydrocarbylpoly(oxyalkylene) moiety of the carbamate consists of one or more hydrocarbyl-terminated poly(oxyalkylene) polymers composed of oxyalkylene units containing from 2 to 5 carbon atoms. The polymers are bound to the carbamate via the oxygen atom of the carbamate linkage, and the poly(oxyalkylene) moiety consists of at least one such poly(oxyalkylene) polymer. The hydrocarbyl group generally contains from 1 to 30 carbon atoms, preferably from 2 to 20 carbon atoms. Preferably the oxyalkylene units contain 3 or 4 carbon atoms. Each poly(oxyalkylene) polymer contains at least 5 oxyalkylene units, preferably 8 to 100 oxyalkylene units, more preferably 10 to 100 units and most preferably 10 to 25 such units. In general, the oxyalkylene units may be branched or unbranched. Preferably the poly(oxyalkylene) polymer chain contains at least some $C_3$—$C_5$ oxyalkylene units, more preferably branched $C_3$—$C_5$ oxyalkylene units are present in at least sufficient number to render the carbamate soluble in hydrocarbon oils of lubricating viscosity to the extent of at least 0.01 to 5 weight percent. A poly(oxyalkylene) polymer chain composed of branched three and/or four carbon oxyalkylene units in at least sufficient amount to effect solubility in a lubricating oil composition is most preferred. The preferred poly(oxyalkylene) compounds are composed, at least in part, of the branched oxyalkylene isomers, particularly oxypropylene, and oxybutylene units which are obtained from 1,2-propylene oxide and from 1,2-butylene oxide, respectively.

The hydrocarbyl moiety (R-) which terminates the poly(oxyalkylene) chain contains from 1 to 30 carbon atoms, preferably from 2 to 20 carbon atoms, and is generally derived from a monohydroxy compound (ROH) which is the initial site of the alkylene oxide addition in the polymerization reaction. Such monohydroxy compounds are preferably aliphatic or aromatic alcohols of from 1 to 30 carbon atoms, more preferably an alkanol or an alkylphenyl, and most preferably an alkylphenol wherein the alkyl is a straight- or branched-chain of from 1 to 24 carbon atoms. The hydrocarbyl component of the poly(oxyalkylene) moiety preferably denotes an organic radical composed of carbon and hydrogen which may be aliphatic, alicyclic, aromatic or combinations thereof, i.e., aralkyl. Preferably, the hydrocarbyl group will be relatively free of aliphatic unsaturation, i.e., ethylenic and acetylenic, particularly acetylenic unsaturation.

Aminohydrocarbyloxyhydrocarbyl moiety

The aminohydrocarbyloxyhydrocarbyl moiety (which can also be referred to as the aminoether moiety) of the polyether aminoether carbamate is preferably derived from a diamine having an amino group (or amine nitrogen atom) at either end of the molecule and separated by a hydrocarbyloxyhydrocarbyl sub-moiety. The diamine is preferably reacted with a hydrocarbylpoly(oxyalkylene) chloroformate to produce the required hydrocarbylpoly(oxyalkylene) aminohydrocarbyloxyhydrocarbyl carbamate. Preferably, the diamine provides the product polyether aminopolyether carbamate with, on the average, at least one basic nitrogen atom per carbamate molecule, i.e., a nitrogen atom titratable by a strong acid.

The diaminoether moiety may be represented by the general formula:

$$-NH-X^1\text{+}O-X^2\text{+}_nNH_2$$

within which the ether sub-moiety is represented by $-X^1(O-X^2)_n$. In the ether sub-moiety, $X^1$ and $X^2$ represent linking groups selected from (A) linear, cyclic, or branched alkylene groups containing from 1 to 6 carbon atoms; or (B) arylene groups of from 6 to 12 carbon atoms. These groups may also be optionally substituted, preferably with 1 or 2 groups selected from (C) hydroxyl, alkoxyl, nitrile, amino, and thio, or any alkyl or aryl group also substituted with these functional groups. Although the above (C) substituents are strictly not hydrocarbyl in nature, the term "hydrocarbyl" will be used to refer to the $X^1$ and $X^2$ groups in the aminohydrocarbyloxyhydrocarbyl moiety for the sake of ease in nomenclature and because the preferred embodiments of the invention are composed of either group (A) or (B) components. Although $X^1$ and $X^2$ are selected from the same groups of substituents, they are independent one from the other and may be the same or different. They may also be selected from different groups, i.e., one from (A) and one from (B) in the same molecule, although preferbaly they will be selected from the same group. "n" represents the number of repeating sub-groups within the ether sub-moiety and is in the range from 1 to 10. The molecule is so structured that within the aminoether moiety, the nitrogen atom at either end of the moiety are only bonded to carbon atoms in the ether sub-moieties, not to an oxygen atom.

The more preferred diaminoethers are alkylene ether diamines. Preferably the diaminoethers contain from 2 to 60 carbon atoms, more preferably each of the ether sub-moieties contains 4 to 16 carbon atoms. The number of oxygen atoms in the ether sub-moiety ranges from 1 to 10 but is more preferably from 1 to 4. Examples of suitable diaminoethers are 3-oxapentane-1,5-diamine; 3,6-dioxaoctane-1,8-diamine; 3,6,9-trioxaundecane-1,11-diamine; 4,9-dioxadodecane-1,12-diamine; and 4,7,10-trioxatridecane-1,13-diamine.

As detailed above, the $X^1$ and $X^2$ sub-groups of the ether sub-moiety may also be substituted with arylene groups and/or alkylene and arylene groups substituted with the functional groups selected from group (C) above. Examples of those compounds include 4,4'-diaminodiphenyl ether and 4,9-dioxadodecane-11-hydroxy-1,12-diamine.

Hydrocarbylpoly(oxyalkylene) aminohydrocarbyloxyhydrocarbyl carbamate

Having described the diaminoether component and the poly(oxyalkylene) component, the poly(oxyalkylene) aminoether carbamate dispersing agent of the present invention is obtained by linking these components together through a carbamate linkage, wherein the oxygen may be regarded as the terminal hydroxyl oxygen of the poly(oxyalkylene) alcohol component, and the carbonyl group is preferably provided by the coupling agent, e.g. phosgene.

The poly(oxyalkylene) aminoether carbamate preferably has at least one basic nitrogen atom per molecule. A "basic nitrogen atom" is one that is titratable by a strong acid, such as a primary, secondary, or tertiary amino nitrogen, as distinguished from, for example, amido nitrogen,

$$-\overset{\overset{O}{\|}}{C}-\underset{|}{\overset{|}{N}}-$$

which is not so titratable. Preferably, the basic nitrogen atom is in a primary or secondary amino group.

The poly(oxyalkylene) aminoether carbamate has a molecular weight of from 500 to 10,000 [representing an average maximum distribution of poly(oxyalkylene) polymer in the compound] and more preferably from 500 to 5,000.

The class of preferred carbamates may be defined by the following general formula:

$$R\text{+}OC_gH_{2g}\text{+}_jO-\overset{\overset{O}{\|}}{C}-NH-X^1\text{+}O-X^2\text{+}_nNH_2$$

wherein

n is an integer from 1 to 10;

g is an integer from 2 to 5;

j is an integer such that the molecular weight of the carbamate is in the range from 500 to 5,000;

R is a hydrocarbyl group of from 1 to 30 carbon atoms;

$X^1$ and $X^2$ are the same or different substituents selected from the aforementioned (A), (B) and (C); and

$X^2$ can vary independently up to n number of times, each independent $X^2$ substituent being selected from the aforementioned (A), (B) and (C);

and at least a sufficient number of oxyalkylene units ($OC_gH_{2g}$) are branched-chain oxyalkylene units to render the carbamate soluble in liquid hydrocarbons. Preferably j is 5 to 25, g is 4, and n is 1 to 4.

Preparation of the poly(oxyalkylene aminoether carbamates

The additives of this invention are most conveniently prepared by first reacting the appropriate

hydrocarbylpoly(oxyalkylene) alochol with phosgene to produce a hydrocarbylpoly(oxyalkylene) chloroformate. The chloroformate is then reacted with the appropriate diaminoether as detailed above in the presence of a tertiary amine base, e.g. triethylamine, to produce the appropriate poly(oxyalkylene) aminoether carbamate.

The reaction of the poly(oxyalkylene) compound and phosgene is usually carried out on an essentially equimolar basis, although excess phosgene can be used to improve the degree of reaction. The reaction may be carried out at temperatures from −10° to 100°C, preferably in the range from 0° to 50°C. The reaction will usually be complete within 1/4 to 5 hours. Times of reaction will usually be in the range of from 2 to 4 hours.

A solvent may be used in the chloroformylation reaction. Suitable solvents include, for example, benzene and toluene.

The reaction of the resultant chloroformate with the amine may be carried out neat or preferably in solution. Temperatures of from −10° to 200°C may be utilized, and the desired product may be obtained by water wash and stripping, usually by the aid of a vacuum, of any residual solvent.

The mol ratio of the basic amine nitrogen to polyether chloroformate will generally be in the range from 2 to 20 mols of basic amine nitrogen per mol of chloroformate, and more usually 5 to 15 moles of basic amine nitrogen per mol of chloroformate. Since suppression of polysubstitution of the diaminoethers is usually desired, large molar excesses of the diamine will generally be used. Additionally, the preferred adduct is the monocarbamate compound, as opposed to the bis(carbamate) or disubstituted aminoethers.

The reaction or reactions may be conducted with or without the presence of a reaction solvent. A reaction solvent is generally employed whenever necessary to reduce the viscosity of the reaction product. These solvents should be stable and inert to the reactants and reaction product. Depending on the temperature of the reaction, the particular chloroformate used, the mol ratios, as well as the reactant concentrations, the reaction time may vary from less than 1 minute to 3 hours.

After the reaction has been carried out for a sufficient length of time, the reaction mixture may be subjected to extraction with a hydrocarbon-water or hydrocarbon-alcohol-water medium to free the product from any low-molecular-weight amine salts which have formed and any unreacted diamine. The product may then be isolated by evaporation of the solvent. Further purification may be effected, for example, by column chromatography on silica gel.

Depending on the particular use of the carbamate of this invention, the reaction may be carried out in the medium in which it will ultimately find use, e.g. polyether carriers or an oleophilic organic solvent or mixtures thereof and be effected at concentrations which provide a concentrate of the carbamate. Thus, the final reaction mixture may be in a form suitable to be used directly for blending in fuels.

Fuel compositions

The polyether aminoether carbamates will generally be employed in a hydrocarbon distillate fuel. The proper concentration of additive necessary in order to achieve the desired detergency and dispersancy varies depending, for instance, upon the type of fuel employed, or the presence of other detergents, dispersants and other additives. Generally, however, from 30 to 2,000 weight parts per million, and preferably from 100 to 500 ppm of polyether aminoether carbamate per part of base fuel is needed to achieve the best results. When other detergents are present, a smaller amount of polyether aminoether carbamate may be used. For performance as a carburetor detergent only, lower concentrations, for example 30 to 70 parts per million, may be preferred.

The deposit control additive may also be formulated as a concentrate, using an inert stable oleophilic organic solvent boiling in the range from 150° to 400°F (65.6 to 204.4°C). Preferably, an aliphatic or an aromatic hydrocarbon solvent is used, such as benzene, toluene, xylene or higher-boiling aromatics or aromatic thinners. Aliphatic alcohols of 3 to 8 carbon atoms, such as isopropanol, isobutylcarbinol and n-butanol, in combination with hydrocarbon solvents are also suitable for use with the detergent-dispersant additive. In the concentrate, the amount of additive will be ordinarily at least 10 percent by weight and generally not exceed 70 percent by weight, preferably 10 to 50 weight percent and most preferably from 10 to 25 weight percent.

In gasoline fuels, other fuel additives may also be included such as antiknock agents, e.g. methylcyclopentadienyl manganese tricarbonyl, tetramethyl or tetraethyl lead, or other dispersants or detergents such as various substituted succinimides, or amines. Also included may be lead scavengers such as aryl halides, e.g. dichlorobenzene or alkyl halides, e.g. ethylene dibromide. Additionally, antioxidants, metal deactivators and demulsifiers may be present.

The following Examples illustrate the preparation of carbamates of the invention.

Example 1

Reaction of alkylphenolpoly(oxybutylene)chloroformate with 4,9-dioxadodecane-1,12-diamine

4,9-Dioxadodecane-1,12-diamine (34 g, 0.167 mol) was dissolved in 500 ml of ether. The solution was cooled to 0°C and triethylamine (9.3 ml, 0.067 mol) was added. A solution of alkylphenylpoly(oxybutylene) chloroformate (50 g, 0.033 mol) dissolved in 300 ml of ether was added dropwise over a 1-hour period. The reaction mixture was then stirred at room temperature for 20 hours. Potassium carbonate was then added. The mixture was filtered and the solvent was removed under vacuum. This material was taken up with

excess petroleum ether and washed with four portions of water. The organic layer was dried over potassium carbonate and filtered. Solvent removal under vacuum gave 51.8 g of yellow oil.

This material was column chromatographed on silica gel using 1:4 methanol/methylene chloride to elute. 20.2 g of clear oil was obtained (Rf=0.18). The product contained 1.51% nitrogen and 0.79% basic nitrogen. The product showed a strong carbonate absorption at 1725 $cm^{-1}$.

Example 2

Reaction of alkylphenolpoly(oxybutylene)chloroformate with 4,7,10-trioxatridecane-1,13-diamine

4,7,10-Trioxatridecane-1,13-diamine (35 g, 0.16 mol) was dissolved in 500 ml of ether. The solution was cooled to 0°C and triethylamine (9.3 ml, 0.067 mol) was added. A solution of alkylphenolpoly(oxybutylene)-chloroformate (50 g, 0.033 mol) dissolved in 500 ml of ether was added dropwise over a 1-hour period. The reaction mixture was then stirred at room temperature for 20 hours. Potassium carbonate was then added. The mixture was filtered and the solvent was removed under vacuum. This material was taken up with excess petroleum ether and washed with four portions of saturated brine. The organic layer was dried over potassium carbonate and filtered. Solvent removal under vacuum gave 54 g of yellow oil.

This material was column chromatographed on silica gel using 1:4 methanol/methylene chloride to elute. 20 g of clear oil was obtained (Rf=0.18). The product contained 1.42% nitrogen and 0.73% basic nitrogen. The product showed a strong carbamate absorption at 1725 $cm^{-1}$.

Example 3

Reaction of alkylphenolpoly(oxybutylene)chloroformate with 4,4'-diaminodiphenyl ether

4,4'-Diaminodiphenyl ether (20 g, 0.1 mol) was dissolved in 500 ml of acetone and 20 ml of pyridine. A drying tube and dropping funnel were attached. A solution of alkylphenolpoly(oxybutylene) chloroformate (50 g, 0.033 mol) dissolved in 100 ml of acetone was added slowly dropwise over a period of 30 minutes. The reaction mixture was stirred at room temperature for 24 hours. The solvent was removed under vacuum and the residue was stripped several times with toluene. The residue was then taken up in excess petroleum ether. Potassium carbonate was added and the mixture was filtered. The filtrate was washed twice with saturated sodium bicarbonate and dried over potassium carbonate. The solution was filtered and stripped several times with toluene. Complete solvent removal under vacuum gave 46 g of clear amber oil.

This material was column chromatographed on silica gel using 30% ethyl acetate/hexane to elute. 19.3 g of clear oil was obtained (Rf=0.33). The product contained 1.40% nitrogen and 0.70% basic nitrogen. The product showed a strong carbamate absorption at 1745 $cm^{-1}$.

The poly(oxyalkylene) aminoether carbamates were blended in gasoline and their deposit reducing capacity tested in an ASTM/CFR Single-Cylinder Engine Test.

In carrying out the tests, a Waukesha CFR single-cylinder engine is used. The test is carried out for approximately 15 hours, at the end of which time the intake valve is removed, washed with hexane and weighed. The previously determined weight of the clean valve is subtracted from the weight of the valve after the test run. The difference between the two weights is the weight of the deposit; the smaller the amount of the deposit measured connoting a superior result. The operating conditions of the test are as follows: water jacket temperature 100°C (212°F), manifold vacuum of 12 in. (30.5 cm) Hg.; intake mixture temperature of 50.2°C (125°F); air-fuel ratio of 12; ignition spark timing of 40°BTC; engine speed of 1,800 rpm; the crankcase oil is commercial 30W oil.

The amount of carbonaceous deposit in milligrams on the intake valves is measured and reported in the following Tables I and II. The base fuel tested was a regular octane unleaded gasoline containing no fuel detergent. Poly(oxybutylene) ethylenediamine carbamate (PDC) is also tested for comparison and is prepared as disclosed in U.S. Patent No. 4,288,612.

TABLE I

Intake valve deposit test[1]

Polyether aminoether carbamate

| Description | Deposit weight (mg) |
|---|---|
| Base fuel | 70.7 |
| PDC (carbamate derived from ethylenediamine) | 18.4 |
| Example 2 (carbamate derived from 4,7,10 trioxatridecane-1,13-diamine) | 6.1 |
| Example 1 (carbamate derived from 4,9 dioxadodecane-1,12-diamine) | 11.9 |

[1]Based on the average of 2 runs at 200 ppm of additive.

TABLE II
Intake valve deposit test[2]
Polyether aminoether carbamate

| Description | Deposit weight (mg) |
|---|---|
| Base fuel | 58.6 |
| PDC | 24.3 |
| Example 3 (carbamate derived from 4,4'-diaminodiphenyl ether) | 33.1 |

[2]Based on the average of 3 runs at 200 ppm of additve.

This data shows that the additives of this invention have excellent deposit control properties, approaching and in some cases surpassing that of a known deposit control additive.

**Claims**

1. A hydrocarbylpoly(oxyalkylene) aminohydrocarbyloxyhydrocarbyl carbamate having a molecular weight in the range from 500 to 10,000, wherein the hydrocarbylpoly(oxyalkylene) moiety of said carbamate is comprised of oxyalkylene units selected from $C_2$—$C_5$ oxyalkylkene units of which there are at least sufficient branched-chain oxyalkylene units to render said carbamate soluble in a liquid hydrocarbon fuel, the hydrocarbyl group of said hydrocarbylpoly(oxyalkylene) moiety contains from 1 to 30 carbon atoms, and the aminohydrocarbyloxyhydrocarbyl moiety of said carbamate is derived from a diaminoether having from 2 to 60 carbon atoms.

2. A carbamate as claimed in Claim 1, wherein the aminohydrocarbyloxyhydrocarbyl moiety of said carbamate is derived from a diaminoether having from 2 to 60 carbon atoms and within which the ether component is composed of groups selected from (A) alkylene groups containing 1 to 6 carbon atoms; (B) arylene groups containing from 6 to 12 carbon atoms; and (C) groups selected from (A) or (B) substituted with groups selected from hydroxyl, alkoxyl, nitrile, amino, thio and alkyl or aryl groups substituted with substituents selected from hydroxyl, alkoxyl, nitrile, amino, and thio groups.

3. A carbamate as claimed in Claim 2, wherein the ether component is a polyalkyl ether.

4. A carbamate as claimed in Claim 1, 2 or 3, wherein the diaminoether is 4,9-dioxadodecane-1,12-diamine; 4,7,10-trioxatridecane-1,13-diamine; or 4,4'-diaminodiphenyl ether.

5. A carbamate as claimed in Claim 1, 2, 3 or 4, wherein the carbamate has a molecular weight in the range from 500 to 5,000.

6. A carbamate as claimed in any preceding claim, wherein said oxyalkylene units are $C_3$—$C_4$ carbon oxyalkylene units.

7. A carbamate as claimed in Claim 6, wherein said oxyalkylene units are oxybutylene units.

8. A carbamate as claimed in any preceding claim, wherein said hydrocarbyl group is an alkyl or alkyl phenyl group.

9. A carbamate represented by the general formula:

$$R\text{+}OC_gH_{2g}\text{+}_j O-\overset{\overset{O}{\|}}{C}-NH-X^1\text{+}O-X^2\text{+}_n NH_2$$

wherein n is an integer from 1 to 10; g is an integer from 2 to 5; j is an integer such that the molecular weight of the carbamate is in the range from 500 to 5,000; R is a hydrocarbyl group of from 1 to 30 carbon atoms; and $X^1$ and $X^2$ are the same or different substituents selected from (A) alkylene groups containing 1 to 6 carbon atoms; (B) arylene groups of from 6 to 12 carbon atoms; and (C) groups selected from (A) and (B) and substituted with groups selected from hydroxyl, alkoxyl, nitrile, amino, thio, and alkyl and/or aryl groups substituted with substituents selected from hydroxyl, alkoxyl, nitrile, amino and thio groups; and wherein $X^2$ can vary independently within the groups consisting of (A), (B) and (C) up to n times.

10. A carbamate as claimed in Claim 9, wherein j is 5 to 25, g is 4, and n is 1 to 4.

11. A hydrocarbon fuel composition comprising a hydrocarbon fuel boiling in the gasoline range and as an additive a carbamate as claimed in any preceding claim in an amount sufficient to reduce deposit formation.

12. A fuel composition as claimed in Claim 11, wherein the carbamate is present in an amount of from 30 to 2000 weight parts per million per part of hydrocarbon fuel.

13. An additive concentrate comprising an inert stable oleophilic organic solvent boiling in the range from 65.6 to 204.4°C and from 10 to 50 weight percent of a carbamate as claimed in any one of Claims 1 to 10.

**Patentansprüche**

1. Hydrocarbylpoly(oxyalkylen)aminohydrocarbyloxyhydrocarbyl - carbamat mit einem

Molekulargewicht im Bereich von 500 bis 10000, wobei der Hydrocarbylpoly(oxyalkylen) - Anteil des Carbamats aus Oxyalkyleneinheiten besteht, ausgewählt aus $C_2$—$C_5$-Oxyalkyleneinheiten, wobei wenigstens soviel verzweigtkettige Oxyalkyleneinheiten vorliegen, daß das Carbamat in einem flüssigen Kohlenwasserstoff - Treibstoff löslich ist, die Hydrocarbylgruppe des Hydrocarbylpoly(oxyalkylen) - Anteils 1 bis 30 Kohlenstoffatome enthält und der Aminohydrocarbyloxyhydrocarbylanteil des Carbamats auf einen Diaminoäther mit 2 bis 60 Kohlenstoffatome zurückgeht.

2. Carbamat nach Anspruch 1, dadurch gekennzeichnet, daß der Aminohydrocarbyloxyhydrocarbylanteil des Carbamats auf einen Diaminoäther mit 2 bis 60 Kohlenstoffatomen zurückgeht, und in welchem die Ätherkomponente aus Gruppen besteht, ausgewählt aus (A) Alkylengruppen, die 1 bis 6 Kohlenstoffatomen enthalten, (B) Arylengruppen, die 6 bis 12 Kohlenstoffatomen enthalten, (C) Gruppen, ausgewählt aus (A) oder (B) substituiert mit Gruppen, ausgewählt aus Hydroxyl-, Alkoxyl-, Nitril-, Amino-, Thio- und Alkyl- oder Arylgruppen, substituiert mit Substituenten, ausgewählt aus Hydroxyl-, Alkoxyl-, Nitril-, Amino- und Thiogruppen.

3. Carbamat nach Anspruch 2, dadurch gekennzeichnet, daß die Ätherkomponente ein Polyalkyläther ist.

4. Carbamat nach Anspruch 1, 2 oder 3, dadurch gekennzeichnet, daß der Diaminoäther aus 4,9-Dioxadodecan-1,12-diamin; 4,7,10-Trioxatridecan-1,13-diamin; oder 4,4'-Diaminodiphenyläther besteht.

5. Carbamat nach Anspruch 1, 2, 3 oder 4, dadurch gekennzeichnet, daß das Carbamat ein Molekulargewicht im Bereich von 500 bis 5000 besitzt.

6. Carbamat nach einem der vorhergehenden Ansprüche, dadurch gekennzeichnet, daß die Oxyalkyleneinheiten $C_3$—$C_4$-Kohlenstoff - oxyalkyleneinheiten sind.

7. Carbamat nach Anspruch 6, dadurch gekennzeichnet, daß die Oxyalkyleneinheiten Oxybutyleneinheiten sind.

8. Carbamat nach einem der vorhergehenden Ansprüche, dadurch gekennzeichnet, daß die Hydrocarbylgruppe eine Alkyl-oder Alkylphenylgruppe ist.

9. Carbamat der allgemeinen Formel

$$R\text{-}(OC_gH_{2g})_j O-\overset{\overset{O}{\|}}{C}-NH-X^1\text{-}(O-X^2)_n NH_2$$

worin n eine ganze Zahl von 1 bis 10 ist, g eine ganze Zahl von 2 bis 5 ist, j eine solche ganze Zahl ist, daß dass Molekulargewicht des Carbamats im Bereich von 500 bis 5000 liegt, R eine Hydrocarbylgruppe mit 1 bis 30 Kohlenstoffatomen ist, und $X^1$ und $X^2$ gleiche oder verschiedene Substituenten sind, ausgewählt aus (A) Alkylengruppen, die 1 bis 6 Kohlenstoffatome enthalten, (B) Arylengruppen mit 6 bis 12 Kohlenstoffatomen und (C) Gruppen, ausgewählt aus Hydroxyl-, Alkoxyl-, Nitril-, Amino-, Thio- und Alkyl- und/oder Arylgruppen, substituiert mit Substituenten, ausgewählt aus Hydroxyl-, Alkoxyl-, Nitril-, Amino- und Thiogruppen, und wobei $X^2$ unabhängig von den Gruppen, die aus (A), (B) und (C) bestehen, bis zu dem n-fachen variieren kann.

10. Carbamat nach Anspruch 9, dadurch gekennzeichnet, daß j 5 bis 25 ist, g 4 ist und n 1 bis 4 ist.

11. Kohlenwasserstofftreibstoffzubereitung aus einem Kohlenwasserstofftreibstoff, der im Benzinbereich siedet, und einem Carbamat gemäß einem der vorhergehenden Ansprüche in einer Menge, die dazo ausreicht, eine Ablagerungsbildung zu verhindern, als Additiv.

12. Treibstoffzubereitung nach Anspruch 11, dadurch gekennzeichnet, daß das Carbamat in einer Menge von 30 bis 2000 Gew.-Teilen pro Million pro Teil dés Kohlenwasserstofftreibstoffs (Gewicht) vorliegt.

13. Additivkonzentrat aus einem inerten stabilen oleophilen organischen Lösungsmittel, das im Bereich von 65,6 bis 204,4°C siedet, und 10 bis 50 Gew.-% eines Carbamats gemäß einem der Ansprüche 1 bis 10.

**Revendications**

1. Aminohydrocarbyloxyhydrocarbyl- carbamate d'hydrocarbylpoly(oxyalkylène) ayant un poids moléculaire compris dans l'intervalle de 500 à 10 000, la portion hydrocarbylpoly(oxyalkylène) dudit carbamate étant formé de motifs oxyalkylène choisis entre des motifs oxyalkylène en $C_2$ à $C_5$ parmi lesquels il existe au moins une quantité suffisante de motifs oxyalkylène à chaîne ramifiée pour rendre ledit carbamate soluble dans un combustible hydrocarboné liquide, le groupe hydrocarbyle de ladite portion hydrocarbylpoly(oxalkylène) contenant 1 à 30 atomes de carbone et la portion aminohydrocarbyloxyhydrocarbyle du carbamate est dérivée d'un diaminoéther ayant 2 à 60 atomes de carbone.

2. Carbamate suivant la revendication 1, dans lequel la portion aminohydrocarbyloxyhydrocarbyle dudit carbamate est dérivée d'un diaminoéther ayant 2 à 60 atomes de carbone et dont le composant éther est formé de groupes choisis entre (A) des groupes alkylène contenant 1 à 6 atomes de carbone; (B) des groupes arylène contenant 6 à 12 atomes de carbone; et (C) des groupes choisis entre (A) ou (B) substitués avec des groupes choisis entre des groupes hydroxyle, alkoxyle, nitrile, amino, thio et alkyle ou des

groupes aryle substitués avec des substituants à choisir entre les groupes hydroxyle, alkoxyle, nitrile, amino et thio.

3. Carbamate suivant la revendication 2, dans lequel le composant éther est un éther polyalkylique.

4. Carbamate suivant la revendication 1, 2 ou 3, dans lequel le diaminoéther est la 4,9-dioxadodécane-1,12-diamine; la 4,7,10 - trioxatridécane - 1,13 - diamine; ou l'éther de 4,4'-diaminodiphényle.

5. Carbamate suivant la revendication 1, 2, 3 ou 4, qui a un poids moléculaire compris dans l'intervalle de 500 à 5000.

6. Carbamate suivant l'une quelconque des revendications précédentes, dans lequel les motifs oxyalkylène sont des motifs oxyalkylène de 3 ou 4 atomes de carbone.

7. Carbamate suivant la revendication 6, dans lequel les motifs oxyalkylène sont des motifs oxybutylène.

8. Carbamate suivant l'une quelconque des revendications précédentes, dans lequel le groupe hydrocarbyle est un groupe alkyle ou alkylphényle.

9. Carbamate représenté par la formule générale:

$$R\!-\!(OC_gH_{2g})_j\!-\!O\!-\!\overset{\displaystyle O}{\overset{\|}{C}}\!-\!NH\!-\!X^1\!-\!(O\!-\!X^2)_n\!-\!NH_2$$

dans laquelle n est un nombre entier de 1 à 10; g est un nombre entier de 2 à 5; j est un nombre entier choisi de manière que le poids moléculaire du carbamate se situe dans l'intervalle de 500 à 5000; R est un groupe hydrocarbyle de 1 à 30 atomes de carbone; et $X^1$ et $X^2$ sont les mêmes substituants ou des substituants différents choisis entre (A) des groupes alkylène contenant 1 à 6 atomes de carbone; (B) des groupes arylène de 6 à 12 atomes de carbone; et (C) des groupes choisis entre (A) et (B) et substitués avec des groupes choisis entre des groupes hydroxyle, alkoxyle, nitrile, amino, thio et alkyle et/ou des groupes aryle substitués avec des substituants choisis entre des groupes hydroxyle, alkoxyle, nitrile, amino et thio; et $X^2$ peut varier indépendamment jusqu'à n fois à l'intérieur des groupes consistant et (A), (B) et (C).

10. Carbamate suivant la revendication 9, dans lequel j a une valeur de 5 à 25, g a la valeur 4 et n a une valeur de 1 à 4.

11. Composition de combustible hydrocarboné comprenant un combustible hydrocarboné bouillant dans la plage de l'essence de renfermant comme additif un carbamate suivant l'une quelconque des revendications précédentes en une quantité suffisante pour réduire la formation de dépôt.

12. Composition de combustible suivant la revendication 11, dans lequel le carbamate est présent en une quantité de 30 à 2000 parties par million en poids, par partie de combustible hydrocarboné.

13. Concentré d'additif comprenant un solvant organique oléophile stable inerte bouillant dans l'intervalle de 65,6 à 204,4°C, et 10 à 50% en poids d'un carbamate suivant l'une quelconque des revendications 1 à 10.